# EUROPEAN PATENT APPLICATION

(11) **EP 1 375 965 A2**
(43) Date of publication of application: **02.01.2004**
(21) Application number: 03014753.2
(22) Date of filing: 27.06.2003
(51) Int. Cl.: F16H 21/18, F16H 7/10, F16D 23/12

(54) **Actuator device**

(30) Priority: 27.06.2002 US 392165 P
(71) Applicant: North American Clutch Corporation, Milwaukee, WI 53209 (US)
(72) Inventor: Patridge, Gary, Clemens, NC 27012 (US)
(74) Representative: Grünecker, Kinkeldey, Stockmair & Schwanhäusser Anwaltssozietät

(57) **Abstract**

An actuator device (10) adapted to move an object. The actuator device includes a motor (14) connectable with a power source and a rotatable member (34) coupled to the motor for rotation about a central axis. The actuator device also includes a swivel arm (38) positioned on the rotatable member for rotation about the central axis relative to the rotatable member. The swivel arm receives movement from a driving portion (46) of the rotatable member. Further, the actuator device includes a cable (80) coupling the swivel arm with the object, whereby the object is movable in response to movement of the swivel arm.

## Description

### Related Applications

The present application claims the benefit of co-pending Provisional Patent Application Serial Number 60/392,165, filed on June 27, 2002, which is hereby incorporated by reference.

### Field of the Invention

This invention relates generally to actuator devices, and more particularly to actuator devices providing linear motion.

### Background of the Invention

Conventional actuator devices usually comprise some variation of a housing containing a movable piston with an attached rod therein. The rod usually extends outside of the housing and attaches to the object being actuated. A separate, remotely located power source is typically fluidly connected to the housing to provide a compressed fluid to the housing to move the piston and the rod. Conduit or hose is typically utilized to provide the fluid connection between the power source and the housing. Such a conventional actuator device may include a hydraulic or pneumatic cylinder, in combination with a hydraulic pump or an air pump, respectively.

Such conventional actuators may be configured, sometimes in combination with additional structure, to push or pull an object, tilt an object, open and close an object, clamp and/or grip an object, and raise and lower an object.

### Summary of the Invention

The present invention provides, in one aspect, an actuator device adapted to move an object. The actuator device includes a motor connectable with a power source and a rotatable member coupled to the motor for rotation about a central axis. The actuator device also includes a swivel arm positioned on the rotatable member for rotation about the central axis relative to the rotatable member. The swivel arm receives movement from a driving portion of the rotatable member. Further, the actuator device includes a cable coupling the swivel arm with the object, whereby the object is movable in response to movement of the swivel arm.

The present invention provides, in another aspect, an actuating system including an actuator device coupled to an object. The actuator device includes a motor connectable with a power source, a rotatable member coupled to the motor for rotation about a central axis, a protrusion extending from and positioned on the rotatable member a distance from the central axis, a swivel arm receiving movement from the protrusion and being positioned on the rotatable member for rotation relative to the rotatable member about the central axis, and a cable coupled to the swivel arm. The object is coupled to the actuator device by the cable. The cable is moved in response to rotation of the swivel arm to move the object.

The present invention provides, in yet another aspect, an actuating system including an actuator device coupled to a lever of a clutch/brake assembly. The actuator device includes a motor connectable with a power source, a rotatable member coupled to the motor for rotation about a central axis, a protrusion extending from the rotatable member and positioned on the rotatable member a distance from the central axis, a swivel arm positioned on the rotatable member for rotation relative to the rotatable member about the central axis, the swivel arm receiving movement from the protrusion, and a cable coupled to the swivel arm for movement in response to movement of the swivel arm. The lever of the clutch/brake assembly is selectively actuated to engage and disengage the clutch/brake assembly. The cable is coupled to the lever to engage and disengage the clutch/brake assembly in response to movement of the cable.

Other features and aspects of the present invention will become apparent to those skilled in the art upon review of the following detailed description, claims and drawings.

### Brief Description of the Drawings

In the drawings, wherein like reference numerals indicate like parts:
FIG. 1 is a front perspective view of an actuator device with a portion of the outer structure removed to reveal a portion of the inner structure;
FIG. 2a is a top view of the actuator device of FIG. 1, illustrating the actuator device in a first position;
FIG. 2b is a top view of the actuator device of FIG. 1, illustrating the actuator device in a second position;
FIG. 2c is an enlarged view of a portion of the actuator device of FIG. 1.
FIG. 3 is a partial sectional view of the actuator device of FIG. 1.
FIG. 4 is an example schematic wiring diagram utilized with the actuator device of FIG. 1;
FIG. 5 is a top view of a mower deck, illustrating the actuator device of FIG. 1 coupled to a clutch/brake assembly selectively driving mower blades in the mower deck;
FIG. 6 is a top view of a mower deck, illustrating the actuator device of FIG. 1 coupled to an idler pulley selectively tensioning a belt of a pulley system to selectively drive mower blades in the mower deck; and
FIG. 7 is a side view of a mower deck coupled to a riding lawnmower, illustrating the actuator device of FIG. 1 coupled to the mower deck to raise and lower the mower deck relative to the riding lawnmower.

Before features of the invention are explained in detail, it is to be understood that the invention is not limited in its application to the details of construction and the arrangements of components set forth in the following description or illustrated in the drawings. The invention is capable of other constructions and of being practiced or of being carried out in various ways. Also, it is to be understood that the phraseology and terminology used herein is for the purpose of description and should not be regarded as limited.

### Detailed Description

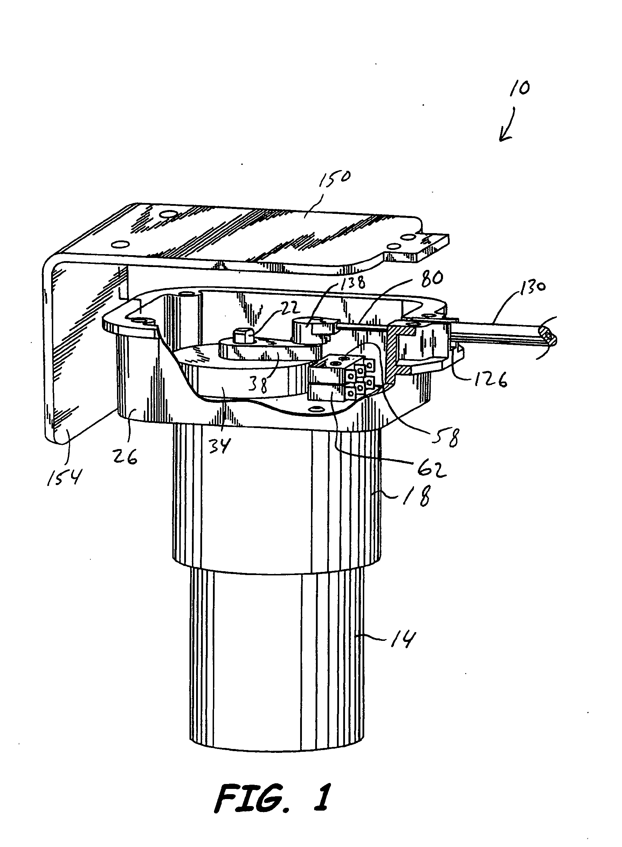

With reference to FIG. 1, the actuator device 10 includes a low-torque, high-speed electric motor 14 driving a speed-reducing gearbox 18. The gearbox 18 converts the motor's speed and torque input to a suitable speed and torque output via an output shaft 22. In the illustrated construction of the device 10, the gearbox 18 is configured to provide a five-stage speed reduction utilizing spur gears. Alternatively, in other constructions of the device 10, more or fewer stages may be utilized to achieve a different speed reduction. Also, other gear train designs may be utilized to achieve a desired speed reduction.

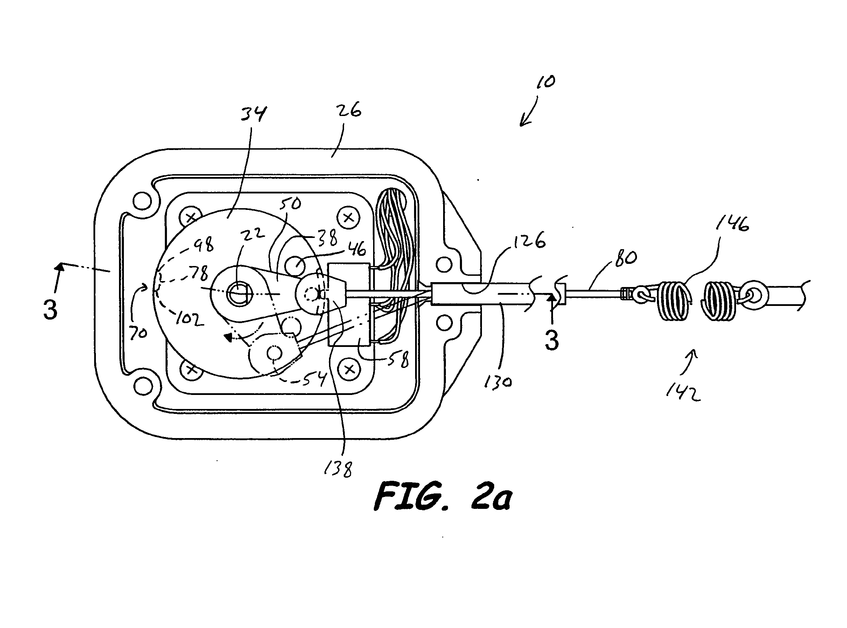

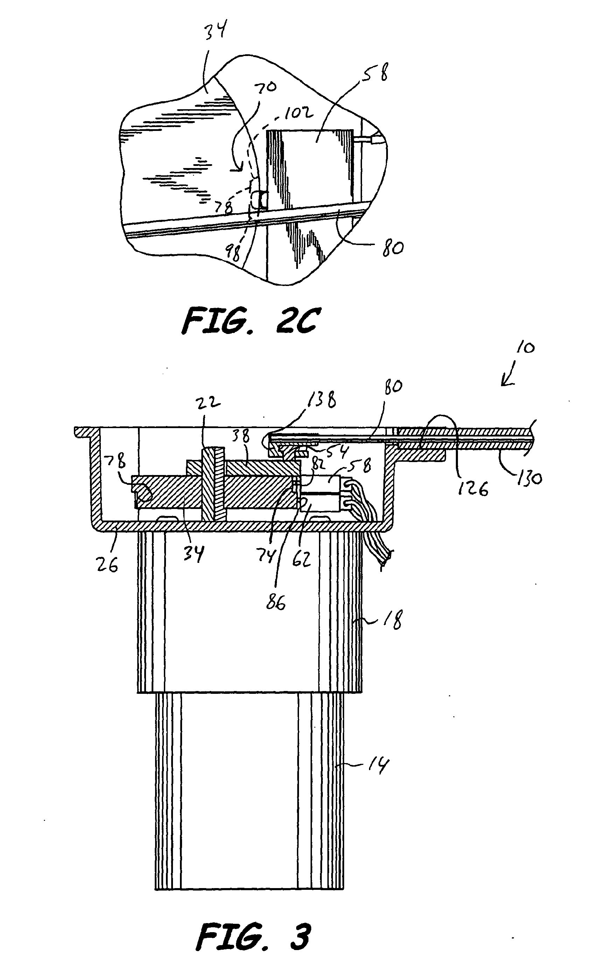

The gearbox 18 is mounted to a housing 26, which contains both mechanical and electrical components. The output shaft 22 extends into the housing 26 and couples to a rotatable member in the form of a timing wheel 34 that selectively imparts movement to a swivel arm 38. In the illustrated construction (see FIGS. 2a-2b), the output shaft 22 defines a non-circular cross section, such that upon being inserted through a matching aperture (not shown) in the timing wheel 34, torque is transmittable from the output shaft 22 to the timing wheel 34. Alternatively, in other constructions of the device 10, the timing wheel 34 may be coupled to the output shaft 22 by an interference fit, a locking collar, or by welding, among other conventional methods. The swivel arm 38 is positioned in mating contact with the timing wheel 34 and is coupled to the output shaft 22 for rotation relative to the output shaft 22.

The timing wheel 34 is concentrically mounted with the output shaft 22 and includes a projection 46 extending from the top surface of the timing wheel 34. The projection is positioned on the timing wheel 34 a radial distance from the output shaft 22. In the illustrated construction of FIGS. 2a-2b, the projection 46 is configured in a cylindrical shape. Alternatively, the projection 46 may be configured in any number of shapes. The projection 46 contacts a side surface 50 of the swivel arm 38 and imparts rotational movement to the swivel arm 38 upon rotation of the timing wheel 34. The swivel arm 38 co-rotates with the output shaft 22 when driven by the projection 46, however, the swivel arm 38 is not rotatably fixed to either the output shaft 22 or the timing wheel 34. The swivel arm 38 is free to rotate about the output shaft 22 and rotate relative to the output shaft 22. The swivel arm 38 includes a projection 54 extending from the top surface of the swivel arm 38 and positioned at a radial distance from the output shaft 22. In the illustrated construction, the projection 54 is configured in a cylindrical shape, however, the projection 54 may be configured in any of a number of different shapes.

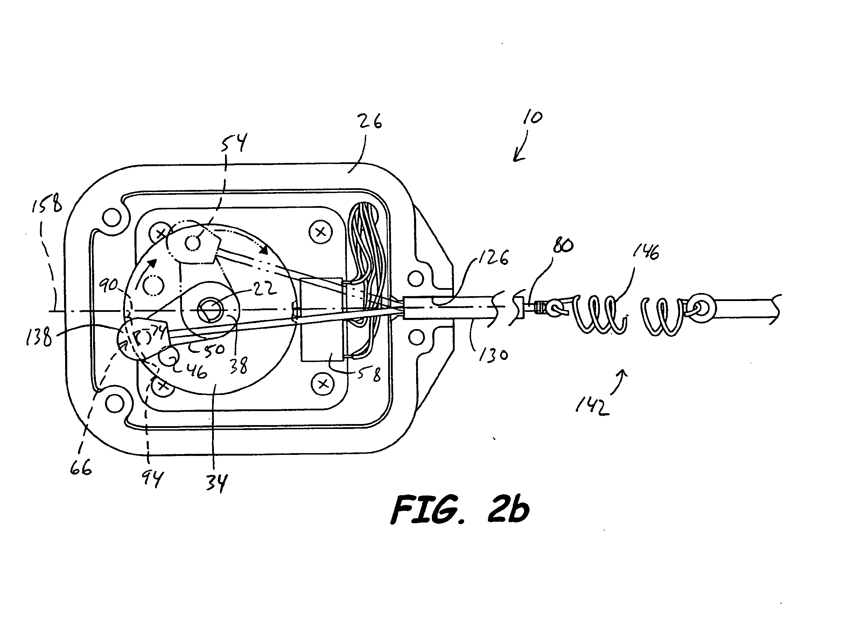

A combination of microswitches 58, 62 and timing marks 66, 70 on the timing wheel 34 control activation of the motor 14. In the illustrated construction, the timing marks 66, 70 are in the form of timing grooves 74, 78 formed in the timing wheel 34. As shown in FIGS. 2a-3, a first microswitch 58 is paired with a first timing groove 74 to deactivate the motor 14 when the timing wheel 34 reaches a first position (shown in FIG. 2a), in which a cable 80 attached to the swivel arm 38 is extended from the housing 26. Likewise, a second microswitch 62 is paired with a second timing groove 78 to deactivate the motor 14 when the timing wheel 34 reaches a second position (shown in FIG. 2b), in which the cable 80 is retracted into the housing 26. In the illustrated construction (see FIG. 2c), the first and second microswitches 58, 62 are triggered by depressing or releasing respective first and second buttons 82, 86. The first timing groove 74 includes a leading edge 90 and a trailing edge 94 with respect to the direction of rotation of the timing wheel 34. The second timing groove 78 also includes a leading edge 98 and a trailing edge 102 with respect to the direction of rotation of the timing wheel 34. The first microswitch 58, therefore, is triggered by the first timing groove 74 when the first button 82 encounters the leading edge 90 of the first timing groove 74. Likewise, the second microswitch 62 is triggered by the second timing groove 78 when the second button 86 encounters the leading edge 98 of the second timing groove 78. The first and second timing grooves 74, 78 are formed in the timing wheel 34 such that the timing wheel 34 rotates about 175° from the first position (see FIG. 2a) to the second position (see FIG. 2b). The first and second timing grooves 74, 78 may be formed in the timing wheel 34 by any conventional machining process, or may be integrally formed with the timing wheel 34.

Alternatively, timing bumps (not shown) may be used in place of the timing grooves 74, 78 to trigger the microswitches 58, 62. Also, the grooves 74, 78 or bumps may be placed along any radial or axial position of the timing wheel 34 rather than the illustrated positions in FIGS. 2a-3. Further, any type of position indicator and/or sensor may be used in place of the timing grooves 74, 78 and microswitches 58, 62. In another construction of the device (not shown), for example, strips of reflective material adhered to the timing wheel 34 in combination with light sensors positioned adjacent the timing wheel 34 may selectively activate and deactivate the motor 14. In yet another construction of the device (not shown), for example, individual magnets coupled to the timing wheel 34 in combination with magnetic pick-up sensors or Hall-effect sensors can selectively activate and deactivate the motor 14.

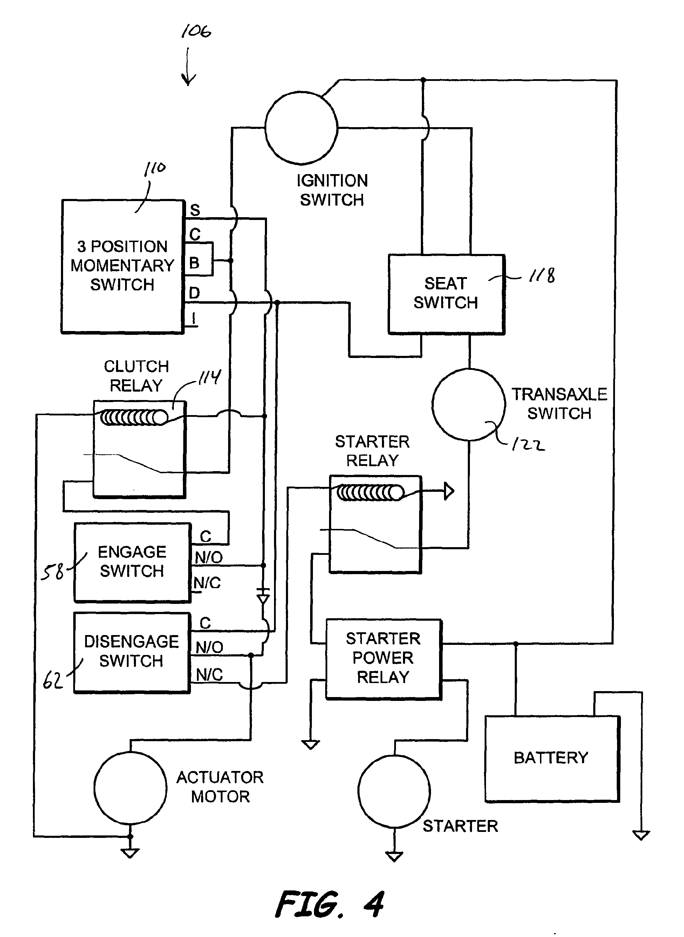

The first and second microswitches 58, 62, in addition to the motor 14, are electrically connected to an electrical circuit 106 that controls operation of the device 10. Such an electrical circuit 106 is schematically illustrated in FIG. 4. The electrical circuit 106 includes a combination of relays and switches to control operation of the device 10. The illustrated electrical circuit 106 shows the device 10 interfacing with the components, relays, and switches of a typical riding lawnmower, however, the device 10 may be used in other host vehicles or as part of a fixed structure.

A 3-position momentary switch 110 is utilized in combination with a relay 114 to activate and deactivate the device 10. As used herein, "activating" the device 10 includes activating the motor 14 to drive the timing wheel 34 from the first position to the second position. Also, "deactivating" the device 10 includes activating the motor 14 to drive the timing wheel 34 from the second position to the first position. The momentary switch 110 is wired to interface with the microswitches 58, 62 in combination with switches of the host vehicle, such as a seat switch 118 or transaxle switch 122 of the riding lawnmower. The seat switch 118 deactivates the device 10 if a rider is not detected on the seat of the riding lawnmower, or the rider leaves the seat while operating the lawnmower. The transaxle switch 122 can deactivate the device 10 upon switching from a forward gear to reverse or neutral. Both the seat switch 118 and the transaxle switch 122, in combination with the device 10, enhance the safety features of the riding lawnmower. For example, if the device 10 is deactivated at any time due to either the seat switch 118 or transaxle switch 122 being triggered, the momentary switch 110 requires the rider to reset the relay 114 before once again activating the device 10. By resetting the relay 114, this forces the rider to intentionally reactivate the device 10, rather than by accident. Alternatively, any electrical switch performing similar or different functions as the momentary switch 110 may be used. Also, any combination of switches and/or relays may be used to control operation of the device 10.

The housing 26 includes a groove 126 formed in one side of the housing 26 such that the groove 126 extends from the interior of the housing 26 to the exterior of the housing 26. A cable jacket 130 enclosing the steel cable 80 is positionable within the groove 126 such that one end of the cable 80 extends into the interior of the housing 26. The end of the cable 80 inside the housing 26 includes an eyelet 138 fixed thereto for engaging the projection 54. Alternatively, the cable 80 may be coupled to the projection 54 by any of a number of different methods, including being threaded through an aperture (not shown) in the projection 54 and crimping a bulb (not shown) on the end of the cable 80 to secure the cable 80 to the projection 54. Further, the cable 80 may alternatively be coupled directly to the swivel arm 38. The end of the cable 80 opposite the end configured with the eyelet138 is coupled to a resilient member 142 providing a biasing tensile force to the cable 80. The resilient member 142 may be an integral component of an object being actuated by the device 10, or the resilient member 142 may be configured as a separate, stand-alone component, such as a spring 146 illustrated in FIGS. 2a-2b.

A cover 150 is coupled to the housing 26 to secure the jacket 130 in the groove 126 and to protect the interior components in the housing 26. In the illustrated construction, the cover 150 is fastened to the housing 26 using conventional fasteners (not shown). Also, the cover 150 is configured with a mounting portion 154 that may be formed in any of a number of different configurations for mounting the device 10.

During operation of the device 10, the motor 14 is selectively activated to drive the gearbox 18, output shaft 22, and timing wheel 34. The gearbox 18 is designed to provide a clockwise rotation of the output shaft 22 and timing wheel 34 when viewed from the top of the device 10 (see FIGS. 2a-2b). Alternatively, the gearbox 18 may provide a counterclockwise rotation to the output shaft 22 and timing wheel 34. Upon rotation of the timing wheel 34, the projection 46 contacts the side surface 50 of the swivel arm 38 and imparts rotational movement to the swivel arm 38 for co-rotation with the timing wheel 34. The rotation of the swivel arm 38 causes movement of the cable 80 relative to the housing 26. Further, when viewed from the exterior of the housing 26, the cable 80 appears to experience substantially linear movement. In the illustrated construction of the device 10, the cable 80 experiences about 1.5 inches of linear movement upon the timing wheel 34 and swivel arm 38 rotating from the first position to the second position. Alternatively, the timing wheel 34 and swivel arm 38 may be sized accordingly to provide more or less linear movement to the cable 80.

As shown in FIG. 2a, the timing wheel 34 is initially shown in the first position with the cable 80 extended from the housing 26. To activate the device 10, the motor 14 is activated by the electrical circuit 106 to drive the timing wheel 34 in a clockwise direction, such that the projection 46 on the timing wheel 34 imparts rotation to the swivel arm 38 (shown in phantom in FIG. 2a), causing the cable 80 to retract within the housing 26 against the bias of the resilient member 142.

The motor 14 will continue to drive the timing wheel 34 until the first microswitch 58 is triggered by the first button 82 encountering the leading edge 90 of the first timing groove 74, at which time the motor 14 is deactivated. However, once the motor 14 is deactivated, the timing wheel 34 will continue to rotate until internal and external resistance on the motor 14 causes the timing wheel 34 to stop rotating. Such external resistance on the motor 14 may include the biasing forces of the resilient member 142 and/or resistance imparted on the motor 14 by the object being actuated. The first timing groove 74 is formed about 15° along the timing wheel circumference to allow ample time and space for the timing wheel 34 to decelerate and completely stop rotating after the first button 82 initially encounters the leading edge 90 of the first timing groove 74 to deactivate the motor 14. Forming the first timing groove 74 about 15° along the timing wheel circumference allows the first button 82 to remain in the first timing groove 74 while the timing wheel 34 decelerates after deactivation of the motor 14 (see FIG. 2c). For example, if the first timing groove 74 was not long enough, the first button 82 of the first microswitch 58 would encounter the leading edge 90 of the first timing groove 74, therefore triggering the first microswitch 58 to deactivate the motor 14, then the first button 82 would encounter the trailing edge 94 of the first timing groove 74 and trigger the first microswitch 58 to reactivate the motor 14, since the first timing groove 74 was not long enough to allow the timing wheel 34 to decelerate and completely stop rotating. The first timing groove 74 must be sized accordingly to allow ample time and space for the motor 14 (and timing wheel 34) to stop rotating so that the motor 14 remains deactivated. However, depending on the motor manufacturer, more or less time and/or space may be required to allow the motor 14 to stop rotating. As a result, more or less than about 15° along the timing wheel circumference may be required for the first timing groove 74.

Upon deactivation of the device 10 (shown in FIG. 2b) by the electrical circuit 106, the device 10 "powers itself off" by activating the motor 14 to cause the timing wheel 34 to drive the swivel arm 38 past a centerline 158 defined by the jacket 130. Once the swivel arm 38 passes through the centerline 158, the bias of resilient member 142 withdraws the cable 80 from the housing 26 and quickly rotates the swivel arm 38 with respect to the timing wheel 34 back to the first position. The timing wheel 34 continues to rotate until the second button 86 encounters the leading edge 98 of the second timing groove 78 to trigger the second microswitch 62 to deactivate the motor 14, at which time the timing wheel 34 is returned to the first position (shown in FIG. 2a).

The same requirements exist for the second timing groove 78 as the first timing groove 74. The second timing groove 78 requires about 35° along the timing wheel circumference to allow ample time and space for the timing wheel 34 to decelerate and completely stop rotating after the second button 86 initially encounters the leading edge 98 of the second timing groove 78 to deactivate the motor 14. The second timing groove 78 requires more space along the timing wheel circumference because the external resistance on the motor 14 is substantially less when the timing wheel 34 rotates from the second position to the first position (i.e., the biasing forces of the resilient member 142 are not working against the rotation of the timing wheel 34). In effect, the motor 14, when not loaded by the cable 80 and the resilient member 142, will "free-wheel" after it is deactivated until internal and external resistance on the motor 14 causes it to stop rotating. The second timing groove 78 must be sized accordingly to allow ample time and space for the motor 14 (and timing wheel 34) to stop rotating so that the motor 14 remains deactivated. However, depending on the motor manufacturer, more or less time and/or space may be required to allow the motor 14 to stop rotating. As a result, more or less than about 35° along the timing wheel circumference may be required for the second timing groove 78.

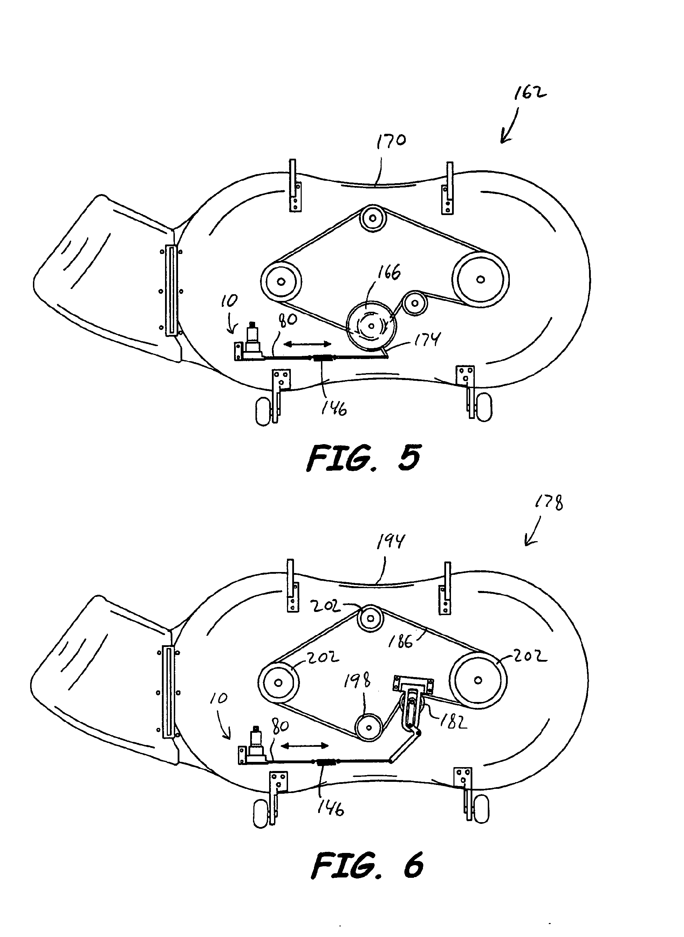

As shown in FIG. 5, an actuating system 162 may include the device 10 actuating a clutch/brake assembly 166 in a mower deck 170 carried by a riding lawnmower. When activated, the device 10 is operable to engage the clutch/brake assembly 166, and when deactivated, the device 10 is operable to disengage the clutch/brake assembly 166. A typical clutch/brake assembly 166 may be found in U.S. Patent No. 5,570,765. As shown in FIG. 5, the clutch/brake assembly 166 is operable to selectively drive and brake mower blades (not shown) in a mower deck. When the clutch/brake assembly 166 is engaged, a rotating input disc linearly engages an output disc to rotate and drive the mower blades of the mower deck 170. The output disc is normally resiliently biased toward the brake member, so when the clutch/brake assembly 166 is disengaged, the output disc is urged back against the brake member to initiate braking of the mower blades. The clutch/brake assembly 166 is engaged and disengaged via an internal cam assembly, the cam assembly having a lever 174 protruding from an opening in the clutch/brake assembly housing to actuate the internal cam assembly. In some clutch/brake assemblies 166, a linear force of about 50 pounds is required to actuate and maintain the lever in a position engaging the clutch/brake assembly 166.

The spring 146 is coupled between the steel cable 80 and the lever 174 to provide a window of adjustment of the force applied to the lever 174. Upon activation of the device 10, the cable 80 is retracted into the housing 26, causing the spring 146 to stretch and the lever 174 to pivot. The spring 146 can be sized (both length and stiffness), according to the amount of retraction of the cable 80, to provide a desired force on the lever 174. In the illustrated actuating system 162, once a linear force of about 50 pounds is achieved in the spring 146, the lever 174 is caused to pivot and engage the clutch/brake assembly 166. After the lever 174 pivots, the spring 146 will continue to stretch until the cable 80 is retracted the amount governed by the timing wheel 34 and swivel arm 38. The device 10 may be configured to provide a somewhat slow, and steady engagement of the clutch/brake assembly 166 to prevent jarring impact forces as a result of rapidly engaging the clutch/brake assembly 166. Also, the device 10 may be configured to disengage the clutch/brake assembly 166 very quickly, such that the response time to deactivating the device 10 to disengaging the clutch/brake assembly 166 is less than about 0.1 seconds.

As shown in FIG. 6, another actuating system 178 may include the device 10 actuating an idler pulley 182 to engage a belt 186 of a pulley system of a mower deck 194 carried by a riding lawnmower. When activated, the device 10 is operable to engage the idler pulley 182 such that the idler pulley 182 tensions the belt 186 so that torque may be transferred from a driving pulley 198 to driven pulleys 202 in the system 178, thereby engaging mower blades in the mower deck 194. When deactivated, the device 10 is operable to disengage the idler pulley 182 from the belt 186, such that the idler pulley 182 loosens the belt 186 so the belt 186 slips on the pulleys 198, 202 and does not transfer torque from the driving pulley 198 to the driven pulleys 202, thereby disengaging the mower blades in the mower deck 194. Like the system 162 of FIG. 5, a spring 146 may be utilized in the system 178 of FIG. 6 to adjust the force applied to the idler pulley 182 by the device 10. Further, the device 10 may be configured in the system 178 of FIG. 6 to provide a slow engagement of the idler pulley 182 and a rapid disengagement, like the device 10 in the system 162 of FIG. 5.

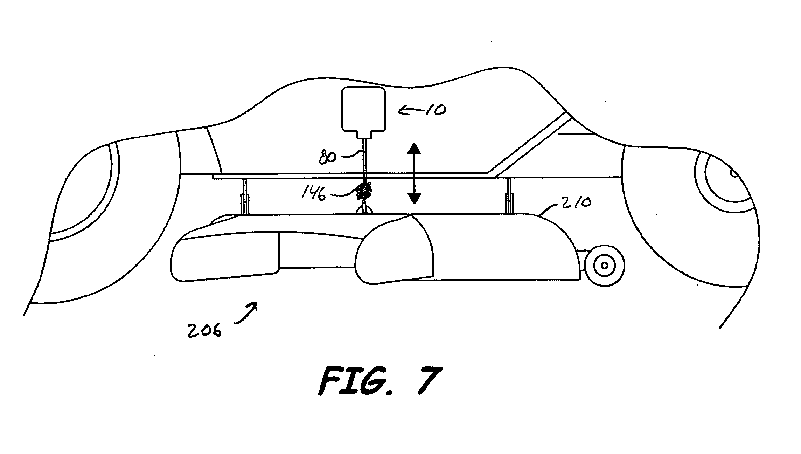

As shown in FIG. 7, yet another actuating system 206 may include the device 10 raising and lowering a mower deck 210 carried by a riding lawnmower. When activated, the device 10 is operable to raise the mower deck 210 such that mower blades in the mower deck are displaced upwardly relative to the riding lawnmower. When deactivated, the device 10 is operable to lower the mower deck 210 such that the mower blades are displaced downwardly relative to the riding lawnmower. Similar to the system 162 of FIG. 5 and the system 178 of FIG. 6, a spring 146 may be utilized in the system 206 of FIG. 7 to adjust the force applied to the mower deck 210 by the device 10. Further, the device 10 may be configured in the system 206 of FIG. 7 to raise or lower the mower deck 210 slowly, or raise or lower the mower deck 210 quickly. Further, the timing wheel 34 may define more than two positions (e.g., the first position and the second position), such that multiple mower heights of the mower deck 210 are possible.

## Claims

1. An actuator device adapted to move an object, the actuator device comprising:
a motor connectable with a power source;
a rotatable member coupled to the motor for rotation about a central axis;
a swivel arm positioned on the rotatable member for rotation about the central axis relative to the rotatable member, the swivel arm receiving movement from a driving portion of the rotatable member; and
a cable coupling the swivel arm with the object, the object being movable in response to movement of the swivel arm.

2. The actuator device of Claim 1, further comprising a gearbox coupling the motor to the rotatable member, the gearbox being configured to increase torque output of the motor to the rotatable member.

3. The actuator device of Claim 1, further comprising a housing enclosing the rotatable member and swivel arm, wherein the cable is retracted and extended relative to the housing by the rotatable member and swivel arm to move the object.

4. The actuator device of Claim 1, wherein the rotatable member is a timing wheel.

5. The actuator device of Claim 1, wherein the driving portion of the rotatable member includes a protrusion extending therefrom, the protrusion being positioned on the rotatable member a distance from the central axis.

6. The actuator device of Claim 1, further comprising a limit switch positioned adjacent the rotatable member, the limit switch being selectively triggered by the rotatable member to selectively electrically connect the motor and the power source.

7. The actuator device of Claim 6, wherein the rotatable member includes a recess formed in an outer peripheral surface of the rotatable member, and wherein the limit switch is selectively triggered by the recess.

8. The actuator device of Claim 7, further comprising a second limit switch positioned adjacent the rotatable member, the second limit switch being selectively triggered by a second recess formed in the outer peripheral surface of the rotatable member.

9. The actuator device of Claim 1, wherein the cable includes an eyelet attached thereto, and wherein the eyelet engages a second protrusion extending from the swivel arm for connection with the swivel arm.

10. The actuator device of Claim 1, wherein the cable is resiliently biased toward the object.

11. An actuating system comprising:
an actuator device including
a motor connectable with a power source,
a rotatable member coupled to the motor for rotation about a central axis,
a protrusion extending from the rotatable member, the protrusion positioned on the rotatable member a distance from the central axis,
a swivel arm positioned on the rotatable member for rotation relative to the rotatable member about the central axis, the swivel arm receiving movement from the protrusion, and
a cable coupled to the swivel arm; and
an object coupled to the actuator device by the cable, the cable being moved in response to rotation of the swivel arm to move the object.

12. The actuating system of Claim 11, further comprising a gearbox coupling the motor and the rotatable member, the gearbox being configured to increase a torque output of the motor to the rotatable member.

13. The actuating system of Claim 11, further comprising a housing enclosing the rotatable member and swivel arm, wherein the cable is retracted and extended relative to the housing by the rotatable member and swivel arm to move the object.

14. The actuating system of Claim 11, wherein the rotatable member is a timing wheel.

15. The actuating system of Claim 11, further comprising a limit switch positioned adjacent the rotatable member, the limit switch being selectively triggered by the rotatable member to selectively electrically connect the motor and the power source.

16. The actuating system of Claim 15, wherein the rotatable member includes a recess formed in an outer peripheral surface of the rotatable member, and wherein the limit switch is selectively triggered by the recess.

17. The actuating system of Claim 16, further comprising a second limit switch positioned adjacent the rotatable member, the second limit switch being selectively triggered by a second recess formed in the outer peripheral surface of the rotatable member.

18. The actuating system of Claim 11, wherein the cable includes an eyelet attached thereto, and wherein the eyelet engages a second protrusion extending from the swivel arm for connection with the swivel arm.

19. The actuating system of Claim 11, wherein the cable is resiliently biased toward the object.

20. The actuating system of Claim 11, wherein the object includes a lever for a clutch/brake assembly, wherein the lever is selectively actuated to engage and disengage the clutch/brake assembly, and wherein the cable is coupled to the lever to engage and disengage the clutch/brake assembly in response to movement of the cable.

21. The actuating system of Claim 20, further comprising a spring coupled between the cable and the lever.

22. The actuating system of Claim 11, wherein the object includes an idler pulley of a pulley system, wherein the idler pulley is selectively actuated to engage and disengage a belt in the pulley system.

23. The actuating system of Claim 11, wherein the object includes a powered implement carried by a motorized vehicle.

24. The actuating system of Claim 23, wherein the implement includes a mower deck carried by a riding lawnmower, and wherein the actuator device is configured to raise and lower the mower deck relative to the riding lawnmower.

25. An actuating system comprising:
an actuator device including
a motor connectable with a power source,
a rotatable member coupled to the motor for rotation about a central axis,
a protrusion extending from the rotatable member, the protrusion positioned on the rotatable member a distance from the central axis,
a swivel arm positioned on the rotatable member for rotation relative to the rotatable member about the central axis, the swivel arm receiving movement from the protrusion, and
a cable coupled to the swivel arm for movement in response to movement of the swivel arm; and
a lever of a clutch/brake assembly, wherein the lever is selectively actuated to engage and disengage the clutch/brake assembly, and wherein the cable is coupled to the lever to engage and disengage the clutch/brake assembly in response to movement of the cable.
